# EUROPEAN PATENT APPLICATION

(11) **EP 2 025 899 A2**
(43) Date of publication of application: **18.02.2009**
(21) Application number: 08252285.5
(22) Date of filing: 04.07.2008
(51) Int. Cl.: F02C 7/32, F02C 7/36, B64D 41/00

(54) **An engine arrangement**

(30) Priority: 01.08.2007 GB 0714924
(71) Applicant: Rolls-Royce plc, 65 Buckingham Gate London SW1E 6AT (GB)
(72) Inventor: Knight, Glenn Alexander, Derby DE56 4GX (GB)
(74) Representative: Gunn, Michael Alan

(57) **Abstract**

There is a necessity to provide power for some aircraft service functions whilst the main engines (34) are not operational, for example when the aircraft is on the ground, and to start the main engines (34). This demand is met by provision of auxiliary power units (21). Conventionally a single auxiliary power unit (2) is located in the tail of the aircraft and requires fuel lines and relatively high capacity electrical cabling in order to provide electrical power for main engine starting and service functions. The present invention provides an auxiliary power unit (21) mounted on each main engine (34) and coupled together through an electrical distribution system. This provides greater redundancy in the event of failure of an auxiliary power unit (21) as well as reducing overall weight.

## Description

The present invention relates to engine arrangements and more particularly to engine arrangements utilised in commercial aircraft having an auxiliary power unit.

In a number of instances it is desirable to provide an auxiliary power unit to be used in order to provide service functions for the aircraft and/or a start up capability for a main engine. The main engine normally provides the service functions such as power for pumps and other requirements as part of its duties. However, the main engine is specified for relatively high operational requirements and therefore operating at reduced power to power a reduced number of simple service functions is not efficient. Hence a much smaller auxiliary power unit is provided.

With regard to commercial aircraft it will be understood that the aircraft generally have main gas turbine engines located on pylons and suspended below the aircraft wings. An auxiliary power unit is located at a remote position such as in a tail or nose cone of the aircraft fuselage. The auxiliary power unit itself may be a much smaller gas turbine engine and arranged to generate electrical power. The electrical power is used to maintain an electrical supply in the aircraft when landed. It will be understood that the aircraft still requires certain electrical and other power to maintain instrumentation, lighting and hydraulic systems, which is provided by the auxiliary power unit.

A further function of an auxiliary power unit is to provide starting for the main engine. In such circumstances the auxiliary power unit is arranged to cycle, that is to rotate, the engine until combustion pick up of the main engine. In more detail, the auxiliary power unit delivers electrical power to a starter motor or drive shaft associated with the main engine. The starter motor cycles the main engine to operation.

Location of the auxiliary power unit at a position such as the tail of the aircraft fuselage creates problems with regard to electrical power distribution and particularly to the relatively heavy duty electric motors required as starter motors for the main engines. Furthermore, the main fuel tanks are located near to the main engines and therefore providing fuel to the auxiliary power unit requires provision of fuel pipes to such remote locations or a separate fuel tank. Hence current location of auxiliary power units is disadvantageous. Furthermore, where only one auxiliary power unit is provided it will be appreciated that, should that auxiliary power unit fail or its distribution system be compromised, then all auxiliary, or secondary, power production is lost, as is the starting function for the main engine. Nevertheless, provision of secondary power systems powered by an auxiliary power unit are particularly advantageous by establishing relative independence and a reduced need for ground equipment or less efficient main engine operation to provide limited maintenance and service functions. This independence from ground equipment is particularly advantageous for military aircraft. However, secondary power system provision is more problematic for larger, generally civil, aircraft.

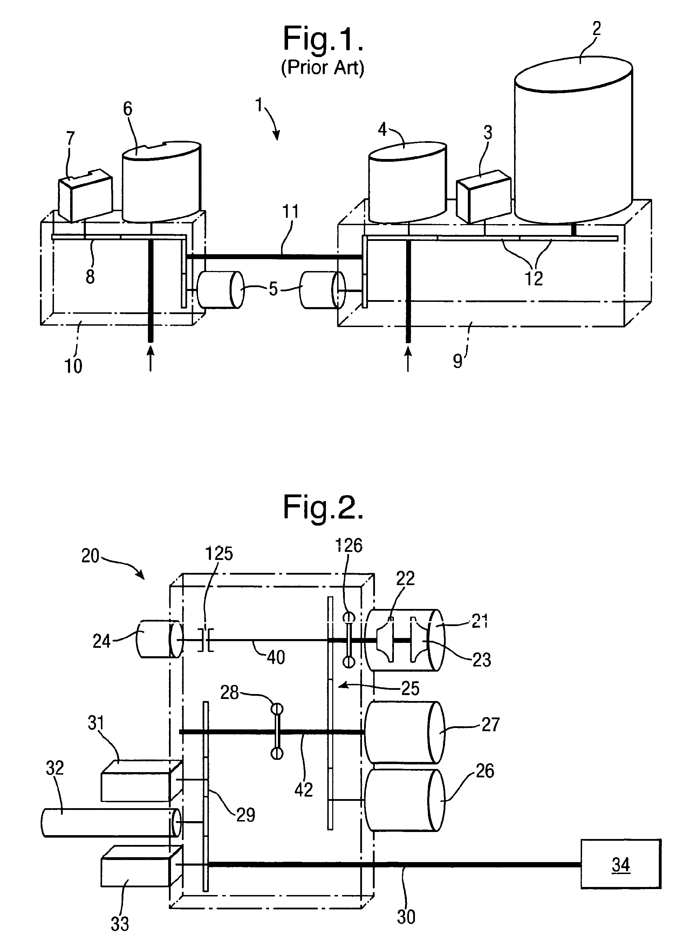

Figure 1 provides a schematic illustration of a typical, conventional secondary power system 1. This system 1 comprises an auxiliary power unit 2 which drives a transmission path in the form of a gear train 12. It will be appreciated that the auxiliary power unit 2 effectively drives through the transmission path or the gear train 12, a hydraulic pump 3 and an electrical generator 4 as well as other service function elements such as fuel pumps 5, another generator 6 and a further hydraulic pump 7. As indicated, the auxiliary power unit 2 is generally a gas turbine engine of appropriate size and specification to provide sufficient electrical power and mechanical drive for the service functions. In order to drive the power transmission path constituted by the gears 12 and a further gear train 8 it is normally necessary to have respective gear boxes 9, 10 connected by a cross drive shaft 11. In such circumstances the auxiliary power unit 2 provides mechanical power to the pumps 3, 5, 7 and drive to the electrical generators 4, 6.

The necessary drive gear boxes 9, 10 are highly stressed but for aircraft installations are necessarily lightweight.

With a multiple propulsive engine configuration it would be advantageous to provide a drive shaft connected to two or more main engines but with civil aircraft the spacing of the main engines makes such a configuration impractical.

In accordance with aspects of the present invention there is provided a gas turbine engine arrangement comprising a main engine and an auxiliary power unit, the main engine and the auxiliary power unit each coupled to an electrical machine to provide electrical power, the auxiliary power unit driving a transmission path connected to the electrical machine, characterised in that the auxiliary power unit is mounted on the main engine.

Typically, the transmission path is mechanical. Generally, the transmission path comprises a gear train having a ratio determined to drive the electrical machine.

Advantageously the electrical machine is configured when driven by the auxiliary power unit to provide electrical power to cycle the main engine for starting.

Typically the arrangement includes a plurality of main engines and more than one main engine has an auxiliary power unit. Generally all or some of the auxiliary power units are coupled to an electrical power distribution path whereby in operation electrical power is distributed to at least one electrical machine connected to one main engine.

Typically, the auxiliary power unit is coupled to the transmission path by a clutch device. Typically, the clutch is a fluid clutch or a sprag clutch.

Typically, the electrical machine is coupled to the arrangement by a machine clutch. Typically, the machine clutch is a fluid clutch or a sprag clutch.

Normally, the auxiliary power unit is a gas turbine engine.

Generally, the auxiliary power unit is connected to an electrical battery.

Preferably the main engine comprises a nacelle and the auxiliary power unit is mounted within the nacelle. More preferably the auxiliary power unit is mounted on a gear box of the main engine. Alternatively the auxiliary power unit is mounted on a fan case or a core engine case of the main engine.

Another aspect of the present invention provides an aircraft comprising two or more main gas turbine engines, at least two of the main engines each comprising an auxiliary power unit as described in the preceding paragraphs.

Also in accordance with aspects of the present invention there is provided a method of providing electrical and / or hydraulic power to an aircraft comprising a power transmission system connected to a gas turbine engine arrangement; the gas turbine engine arrangement comprising a main engine, an auxiliary power unit, and an engagable mechanical or electrical connection between the main engine and the auxiliary power unit; the method comprising the steps of:
during operation of the main engine, engaging either the mechanical or the electrical connection to connect the main engine and the auxiliary power unit to start the auxiliary power unit,
engaging the auxiliary power unit with the transmission system, and
subsequently shutting off the main engine.

A further aspect of the present invention provides a method of starting an auxiliary power unit of a gas turbine engine arrangement; the gas turbine engine arrangement comprising an auxiliary power unit, a starter, and an engagable mechanical or electrical connection between the starter and the auxiliary power unit; the method comprising the step of:
engaging either the mechanical or the electrical connection to connect the starter and the auxiliary power unit to start the auxiliary power unit.

A still further aspect of the present invention provides a method of starting an auxiliary power unit of a gas turbine engine arrangement; the gas turbine engine arrangement comprising at least two main engines each having an auxiliary power unit mounted thereon to transmit drive therebetween, the auxiliary power units connect to one another via network switching means; the method comprising the steps of:
a) starting one auxiliary power unit,
b) starting one of the main engines via a connection with the started auxiliary power unit,
c) starting at least one other main engine via either the started auxiliary power unit or the now operational main engine
such that each of the main engines is capable of being started in the event of a failure of one of the auxiliary power units.

Figure 2 is a schematic view of a first embodiment of the engine arrangement according to the present invention.

Figure 3 is a schematic view of a second embodiment of the engine arrangement of the present invention.

Figure 4 is a schematic view of a gas turbine engine comprising an external gear box and auxiliary power unit in accordance with the present invention.

The first embodiment of an engine arrangement in accordance with aspects of the present invention will now be described by way of example relative to Figure 2.

As described above in relation to figure 1, it is known to provide a cross drive shaft 11 to enable coupling of the port and starboard main engines to a secondary power system 1. Provision of a cross drive shaft in a civil aircraft, where there is wider separation of the main engines, is not feasible. However, connection of the engines is necessary so that the secondary power system can be utilised for starting of either the port or starboard engine. Provision of only one auxiliary power unit in a prior system does not provide any redundancy (in the case of its failure) with regard to electrical or hydraulic power when the aircraft is on the ground. In order to improve flexibility and redundancy of secondary power systems, and in particular potential failure of the auxiliary power unit, the present invention provides one auxiliary power unit per engine.

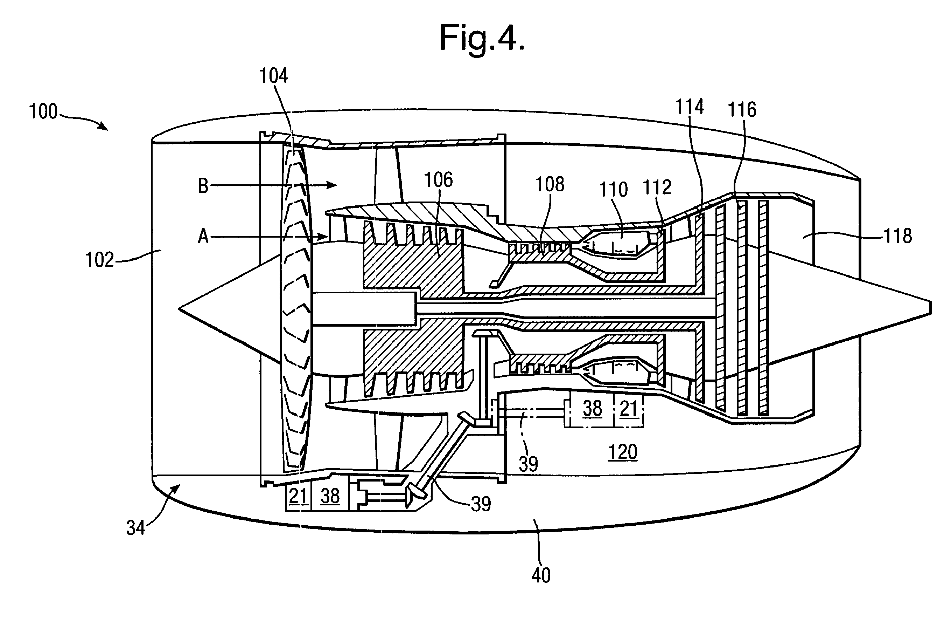

A gas turbine engine 100 is shown in Figure 4 and comprises an air intake 102 and a propulsive fan 104 that generates two airflows A and B. The gas turbine engine 100 comprises, in axial flow A, an intermediate pressure compressor 106, a high pressure compressor 108, a combustor 110, a high pressure turbine 112, an intermediate pressure turbine 114, a low pressure turbine 116 and an exhaust nozzle 118. A nacelle 40 surrounds the gas turbine engine 100 and defines, in axial flow B, a bypass duct 120.

Significantly these auxiliary power units are integrated within the engine, as shown in figure 4. In particular, the auxiliary power units 21 are mounted on an external accessories gear box 38 of each engine 34. Typically the gear box 38 is mounted on the engine fan casing within the nacelle 40 and is connected to the internal components of the engine 34 by a radial drive shaft arrangement 39. The auxiliary power unit 21 is mounted on the gear box 38. Alternatively, as shown in broken lines, the auxiliary power unit 21 may be mounted on a core-mounted gear box 38 and connected to the engine 34 by a drive shaft arrangement 39. Redundancy is provided should one of the auxiliary power units fail by providing electrical couplings between the secondary power systems provided for each engine. Advantageously, and in accordance with the present invention, these electrical couplings allow an increased number of operating modes for the secondary power supply system.

Within the secondary power supply system a gear box is provided comprising a motor / generator to convert the auxiliary power from the auxiliary power unit into electrical power for distribution between the secondary power systems of each engine.

Figure 2 is a schematic illustration of a secondary power system 20 incorporating an auxiliary power unit 21. This auxiliary power unit 21 is a gas turbine engine having compressors 22 and turbines 23. In the embodiment depicted in figure 2 an auxiliary power unit starter 24 is provided coupled through a clutch 125 to initiate operation of the auxiliary power unit 21 when required. The auxiliary power unit 21 is coupled to a mechanical transmission path including gear train 25 through a fluid coupling 126. The gear train 25 comprises a number of gears connected to electrical machines such as a starter 26 for a main engine 34 or electrical power generator 27. The starter 26 and generator 27 may be the same electrical machine with appropriate switching to change configuration. The transmission path 25 is coupled through a further fluid coupling 28 to a second transmission path comprising gears 29 to which service function elements such as a fuel pump 31, an oil pump 32 and an auxiliary pump 33 are connected. It will also be appreciated that an engine drive shaft 30 may be connected to the transmission paths 25, 29 such that the starter 26, when appropriately energised, can induce rotation and cycling of the main engine 34 associated with the shaft 30.

The auxiliary power unit 21 will be sized for accommodation and integration within the main engine's structure. The auxiliary power unit 21 will generally be mounted on the external gearbox of the main engine 34. The auxiliary power unit 21 is removed from its conventional tail cone position within an aircraft and integrated into the main engine 34. Such relocation avoids the necessity of providing large and heavy electrical cable runs through an aircraft to the starters for the main engines and provides significant weight reduction benefits.

Furthermore, the auxiliary power units 21, being gas turbine engines, require fuel. Conventionally fuel tanks are located within a wing structure, proximate the main engines. By mounting the auxiliary power units 21 on the main engine 34, shorter fuel lines are required to supply them, than in the prior art arrangement, which reduces weight as well as increasing available space within an aircraft. Furthermore, with the prior art aircraft layout, both the fuel lines and the auxiliary power unit itself are a potential fire hazard requiring appropriate consideration during aircraft design. Such considerations necessitate provision of fire bottles and associated fire suppression equipment, again adding to weight. By locating the auxiliary power units 21 within the main engine structure, the fire zone designated for each main engine 34 includes the collated auxiliary power unit 21. Additionally, mounting the auxiliary power unit 21 on the main engine 34 advantageously moves the centre of gravity of the aircraft forwards. With a tail-mounted auxiliary power unit, heavy installation architecture is required including a substantial bulkhead. Removal of the auxiliary power unit 21 from the tail to mounted on the main engine 34 allows the bulkhead to be moved rearward, which makes space for extra passenger seating to be provided, along with a better balanced aircraft.

The auxiliary power unit 21 of the present invention is small compared to conventional auxiliary power units. However, as will be described later, the two or more auxiliary power units collectively provide service function capacity whilst the aircraft is on the ground with its main engine(s) not operational, or in the air operating in a mode not optimised for service functions provision.

The starter 24 in figure 2 is a small electrical machine of a suitable size to be driven by a battery power supply in order to start the auxiliary power unit 21.

When the main engine 34 is shut down it will be appreciated that the auxiliary power unit 21 will, through the transmission paths 25, 29 constituted by appropriate gear boxes and clutch assemblies, provide adequate power such that electrical generators 26, 27 normally driven by the main engine 34 can be utilised to provide electrical power. Such use of a common electrical machine, shown schematically in the form of a starter 26 and a generator 27, removes the requirement for dedicated electrical power generators for the secondary power system. Use of a common electrical machine reduces weight.

The transmission paths 25, 29 are generally provided by gear trains. Thus, mechanical advantage will be provided by appropriate choice of gear ratios to drive the electrical machines and/or service pumps. The level of mechanical advantage may be varied dependent upon operational stage or other requirements.

As indicated above, engine and secondary power system arrangements in accordance with aspects of the present invention can operate in a number of modes. In a first mode the main engine 34 is shut down following a normal operational period and the auxiliary power unit 21 started in order to provide a secondary power system. The auxiliary power unit 21 is then required to provide electrical and mechanical power for hydraulic systems within machinery such as pumps 31, 32, 33 normally dependant upon the main engine 34. First, the auxiliary power unit 21 must be started, preferably during the final stages of main engine 34 run by the fluid coupling 126 providing engagement between the drive of the main engine shaft 30 and the auxiliary power unit 21 through the gear trains 29, 25. This rotates the auxiliary power unit 21 to the required speed for start up. In this operational mode a separate auxiliary power unit starter 24 is not required, further reducing complexity and weight. In certain circumstances, such an approach may be problematic since it requires auxiliary power unit 21 start up before main engine 34 shut down. Nevertheless, once the auxiliary power unit 21 is rotating at the required speed, it will successfully start and the fluid coupling 28 may be disengaged to disengage drive from the main engine 34 to the auxiliary power unit 21. The auxiliary power unit 21 maintains operation of the starter 26 and generator 27 through the fluid coupling 126 so that the electrical load of the aircraft is provided for whilst the main engine 34 is shut down.

Alternatively the auxiliary power unit 21 is started during operation of the main engine, by engaging either the mechanical or the electrical connection to connect the main engine 34 and the auxiliary power unit to start the auxiliary power unit 21. Then the auxiliary power unit 21 is engaged with the transmission system without subsequently shutting off the main engine. Thus the auxiliary power unit 21 functions simultaneously with the main engine 34 so that the auxiliary power unit 21 powers service functions on the aircraft whilst the main engine 34 provides propulsive thrust for the aircraft.

In a second mode of operation the auxiliary power unit 21 is started by the separate electrical starter 24. A clutch 125 is provided to selectively couple the starter 24 with a drive shaft of the auxiliary power unit 21. During auxiliary power unit 21 start a fluid coupling 126 will decouple the main components of the transmission path 25, 29 whilst the starter 24 accelerates the shaft of the auxiliary power unit 21 to ignition speed for starting. Following a successful start, the coupling 126 will be engaged such that the auxiliary power unit 21 drives the common electrical machine 26, 27, allowing electrical power to be applied or extracted therefrom. Alternatively, the coupling 126 and coupling 28 are made to couple the auxiliary power unit 21 to the main engine shaft 30 to perform a main engine 34 start by direct mechanical drive transmission.

In a third mode of operation, the common electrical machine 26, 27 is used as a starter. Such re-using of the same system components (electrical machines 26, 27) will eliminate two electrical machines (not shown) that are conventionally required when an auxiliary power unit 21 is provided in a tail cone of an aircraft. As a main engine starter the machine 26, 27 generates electrical power and receive electrical power from other secondary power systems associated with other main engines 34. There may be advantages with respect to maintaining redundancy in view of potential failure of electrical machines 26, 27 by including or retaining a suitable electrical starter for the main engine 34, to be driven by electrical power provided by the auxiliary power unit 21 and secondary power system 20.

A fourth mode of operation addresses the possibility of adding starting redundancy if one or both electrical machines 26, 27 fail. Electrical main engine starting can be achieved by de-coupling the auxiliary power unit 21 from the electrical machines, comprising the starter 26 and/or generator 27, using the coupling 126. By maintaining the coupling 28 it will be appreciated that electrical start, in order to rotate and cycle the main engine 34, can be achieved by providing electrical energy to the electrical machines 26, 27. In such circumstances, the main engine 34 will be driven through the shaft 30 via the transmission path 29 and fluid coupling 28, along with the fuel pump 31, the oil pump 32 and the hydraulic pump 33. Electrical power from one running main engine 34 can be utilised as an electrical power overhead to drive the starter 26 for another main engine 34. Furthermore by provision of an auxiliary power unit 21 for each main engine 34 it will be appreciated that where one auxiliary power unit 21 is inoperative the other auxiliary power units 21, associated with other main engines 34, can be utilised in order to start the main engine 34 associated with the inoperative auxiliary power unit 21. It may also be possible to configure engine arrangement design so that each secondary power system 20, through its auxiliary power unit 21, is insufficient to start the main engine 34 with which it is associated so that it must be supplemented by other secondary power systems 20/auxiliary power units 21 associated with other main engines 34. It will be understood that once one main engine 34 is operational then there will be ample electrical power to provide service functions as well as to start other main engines 34.

A further mode of operation relates to starting of the auxiliary power unit 21 whilst the main engine 34 is still operating. In some flight conditions it is desirable to limit the amount of secondary power taken off the main engine 34, for example during descent. The auxiliary power unit 21 can be started from either the main engine 34 or an electrical starter 24 as indicated above. Once the auxiliary power unit 21 has been successfully started and relative shaft speeds synchronised through the transmission paths 25, 29 and the couplings 126, 28, the auxiliary power unit 21 can provide the necessary power for the electrical generators and electrical machines 26, 27 along with other service function accessories such as pumps 31, 32, 33 instead of or in addition to the main engine 34. Once synchronisation of shaft speeds is achieved, generally the coupling 28 will be opened to de-couple the auxiliary power unit 21 and the electrical machines 26, 27 from the main engine 34. The auxiliary power unit 21 will then provide the full electrical generating capacity required for service functions independently of the main engine 34. Such an approach will enable more appropriate operation of the main engine 34. For example, during the start of descent by a aircraft it is generally desirable to throttle back the main engine 34 to a lower idle speed at which point removing large amounts of secondary power, typically from the high pressure and intermediate pressure spools of the engine, can result in engine surge.

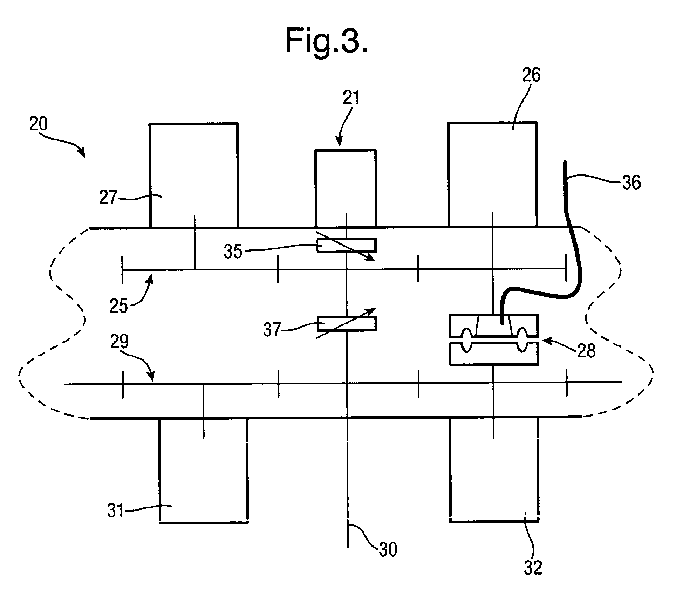

A second embodiment of the engine arrangement of the present invention is shown in Figure 3. The auxiliary power unit 21 is connected to a gear train 25 via an overrunning clutch, particularly a sprag clutch 35. This is instead of the fluid coupling 126 of the first embodiment. As in the first embodiment, the gear train 25 connects the auxiliary power unit 21 to the starter 26 and generator 27, which functions may be provided by a single electrical machine.

The auxiliary power unit 21 can be started either electrically or mechanically from the main engine 34 whilst that is running or via a dedicated starter 24. The gear train 25 and electrical machine 26, 27 are driven by the auxiliary power unit 21. A fluid coupling 28 is provided to connect the gear train 25 to a second gear train 29. This fluid coupling 28 can be filled from a controllable source via supply line 36 so that the gear trains 25, 29 are coupled together. The second gear train 29 is connected to accessory pumps 31, 32, 33 as in the first embodiment. Alternatively, a hydraulic pump may be connected to the first gear train 25.

The first and second gear trains 25, 29 are coupled together by a second overrunning clutch, preferably a sprag clutch 37. The second gear train 29 additionally connects the main engine 34 to the secondary power system 20 via the main engine shaft 30.

Once the auxiliary power unit 21 is running it drives the electrical machine 26, 27 as a generator and thereby makes auxiliary power available for service functions and main engine 34 starting. By introducing fluid, usually oil, to the fluid coupling 28 drive power is transferred to the second gear train 29 and thus power is provided to the accessory pumps 31, 32, 33 and main engine 34 via the main engine shaft 30. When the main engine 34 has reached a stable idle level both the auxiliary power unit 21 and the fluid supply to the fluid coupling 28 can be switched off. The first sprag clutch 35 enables the first gear train 25 to be driven, via the second sprag clutch 37, by the second gear train 29 and main engine 34 whilst the auxiliary power unit 21 slows and stops rotating. There is therefore minimal heat generation or loss in the fluid coupling 28 since both halves are driven at substantially the same speed.

At main engine 34 shutdown, the auxiliary power unit 21 can be electrically started from the main engine 34. The main engine 34 is then shut down. The second sprag clutch 37 freewheels, or overruns, to allow the main engine 34 and the accessories 31, 32 connected to the second gear train 29 to slow and stop rotating. Hence, the first gear train 25 and the electrical machines 26, 27 and accessories connected thereto are driven by the auxiliary power unit 21 but the accessories 31, 32 connected to the second gear train 29 are not driven. This allows driving of selected accessories only.

The auxiliary power unit 21 can also be started to limit the amount of secondary power off-Lake required during certain flight conditions, for example descent. As the auxiliary power unit 21 is accelerated to its full speed the first sprag clutch 35 ceases to freewheel and the auxiliary power unit 21 therefore assists in driving the electrical machines 26, 27 as generators.

The use of sprag clutches 35, 37 is beneficial since no control intervention is required in order to match gear speeds to give smooth clutch engagement. Instead the clutches automatically engage once the shaft speeds match. However, alternative clutch arrangements can be used instead.

Secondary power systems 20 may be shut down when less electrical power generation is required, or turned on when there is a failure of one or more other auxiliary power units 21. Typically, the engine arrangement will be designed such that operation of only one auxiliary power unit 21 is necessary to provide base service functions in terms of electrical and pumping requirements for ground maintenance of the aircraft and/or to enable at least one main engine 34 to be started. It will be appreciated that when one main engine 34 is started then there will be additional electrical power available and potential for power distribution for service functions. An engine arrangement in accordance with aspects of the present invention will provide several auxiliary power units 21 integral with respective main engines 34 to achieve a desired level of auxiliary power operation but with a requirement for only one auxiliary power unit 21 to be functional to provide base operational performance.

In order to provide full function, each secondary supply system 20 should be coupled to a distribution network between the main engines 34. Electrical power generates by one auxiliary power unit 21 can be distributed to other main engines 34 as required for start up or service functions.

In a preferred embodiment, the secondary power system 20 utilises the same electrical machines 26, 27 as the main engine 34. This means that the necessary and existing electrical power distribution system within the aircraft may be utilised to transfer sufficient electrical energy to starters in the other main engines 34 as well as to distribute electrical power for service functions. Appropriate network switching will be required to achieve this distribution as well as to ensure that it is possible to provide elective reduction in load requirements should an auxiliary power unit 21 fail.

A further aspect of the present invention relates to engine starting on cold days. To start an engine on a cold day requires higher power to rotate the spools of the gas turbine engine due to increased viscosity of cooling and lubricating oils within the engine. In existing starting techniques the starting torque is fixed for the engine. However, it will be understood that the cold air has more density so once a gas turbine engine is operational the cold air generally improves its efficiency as an auxiliary power unit. In such circumstances more power is available from the auxiliary power unit to be coupled through the transmission path in order to cycle and start the engine purely by mechanical action.

Aspects of the present invention provide a starting system for a main engine which does not require provision of two starter/generators. Instead a single low cost and weight saving electrical machine can be utilised to act as a starter as well as an electrical generator as required. Such an approach will also reduce system complexity and the number of electrical power cables required.

A main engine electrical generator cannot be used or operated on the ground, as there are insufficient main engine driven cooling supplies either by fuel flow or air. Such problems generally do not occur with an auxiliary power unit mounted on an external gear box or other structure of a main engine. The auxiliary power unit will generate its own cooling air flow through the nacelle, and the fuel flow to the auxiliary power unit is an additional coolant source. Such reductions in demand generally extend the operating range of several components of the main engine.

By externally mounting the auxiliary power upon the main engine it will be appreciated that access to that auxiliary unit is improved. Such improved access will aid maintenance and servicing. Additionally the auxiliary power unit will have a higher power density than a conventional electrical machine used for a main engine start, which provides a significant weight benefit in operational use.

Of particular advantage is provision of an engine arrangement in which there is a secondary power system 20 which allows the auxiliary power unit 21 to be started either from action of the main engine 34 prior to shut down or mid flight or electrically from a battery supply. It will also be appreciated that during an in flight mode of main engine 34 operation it may be desirable to reduce output from that main engine 34. With regard to an aircraft this may be during initiation of a descent where it is desirable to throttle back an engine to a low idle speed at which point in the engine cycle removing relatively large amounts of electrical power from the engine to provide service functions to pumps for hydraulic, fuel and lubricant oil flows will result in an engine surge. Such special measures to prevent surge will waste fuel.

Typical prior secondary power systems rely upon a single auxiliary power unit located in a tail cone in order to start all main engines. By provision of an auxiliary power unit mounted on each main engine it is possible to include electrical starting for the scenario where one auxiliary power unit 21 has failed by utilising an auxiliary power unit 21 of a paired main engine 34. The other auxiliary power unit 21 may start the engine 34 directly or more typically starts its own main engine 34 in order to generate sufficient electrical power to provide starting capacity for all main engines 34 including the main engine 34 with a failed auxiliary power unit 21. Such an approach provides greater flexibility and redundancy with respect to aircraft operation without significantly adding to weight.

Rather than providing a dedicated starter 24 for the auxiliary power unit 21, an appropriate electrical battery can be provided to supply power to drive the electrical machines 26, 27. By providing additional windings or reusing those machines 26, 27 it is possible to start the auxiliary power unit 21.

The electrical machines 26, 27 typically act electively as starters or electrical generators. However, by utilisation of modular windings these functions can be achieved by one electrical machine.

Modifications and alterations to aspects of the present invention will be appreciated by those skilled in the technology. Thus, as indicated aspects of the present invention have particular applicability for gas turbine engines in aircraft. However, the engine arrangement may also be utilised for other applications or for other engines than gas turbine engines. For example, the present invention could be used in conjunction with a main engine for electrical power generation at a high usage factory or foundry during periods when that main engine is switched off for maintenance but some auxiliary power is required to maintain on site functions including lighting and maintenance of equipment such as heating to maintain a furnace or kiln lining. However aspects of the present invention have particular applicability where there are multiple main engines and there will be weight penalties in relation to provision of secondary power supply systems.

In an aircraft implementation, the engine arrangement of the present invention can have additional benefits for the whole aircraft. Since the auxiliary power unit 21 is integrated into the main engine 34 rather than being mounted in the tail or nose cone, the tail can be redesigned. This may result in a lighter tail since there will be no need to design for containment of a burst rotor of the auxiliary power unit. Furthermore, it may be possible to move the pressure bulkhead aft of its current position and therefore provide additional seating in the body of the aircraft.

Optionally the main engine 34 and the auxiliary power unit 21 may be connected to a monitoring arrangement in order to ensure the electrical machine 26, 27 provides at least the desired level of electrical power.

Additionally, the electrical machine 26, 27 can be electively switched to act as an electrical generator or an electrical motor.

For a twin-engine aircraft provision of two auxiliary power units, each mounted on one of the main engines means that if one of the auxiliary power units fails, the other auxiliary power unit can be started and then either its own or the other main engine is started using the working auxiliary power unit. Subsequently, the second engine can be started from the working auxiliary power unit or from the now operational main engine.

For a four-engine aircraft there may be four auxiliary power units, each integral with a main engine, or there may be fewer (but at least two) auxiliary power units than main engines. Provision of at least two auxiliary power units means that in the case where one of the auxiliary power units has failed, another auxiliary power unit is started. Then one of the four main engines is started from the functioning auxiliary power unit. The other three main engines can then be started, either from the functioning auxiliary power unit or from a now operational main engine. The other auxiliary power units (where provided) may also be started, either from the functional auxiliary power unit or from a now operational main engine. This provides great flexibility since all the main engines can be started in the event of a failure of one of the auxiliary power units. Furthermore, if only certain auxiliary power units are required, due to the service functions each supports, it is not necessary to start all of the auxiliary power units.

## Claims

1. A gas turbine engine arrangement comprising a main engine (34) and an auxiliary power unit (21), the main engine (34) and the auxiliary power unit (21) each coupled to an electrical machine (26, 27) to provide electrical power, the auxiliary power unit (21) driving a transmission path (25, 29) connected to the electrical machine (26, 27), **characterised in that** the auxiliary power unit (21) is mounted on the main engine (34).

2. An arrangement as claimed in claim 1 wherein the transmission path is mechanical.

3. An arrangement as claimed in any of claims 1 or 2 wherein the transmission path comprises a gear train (25, 29) having a ratio determined to drive the electrical machine (26, 27).

4. An arrangement as claimed in any preceding claim wherein the electrical machine (26, 27) is configured when driven by the auxiliary power unit (21) to generate electrical power to cycle the main engine (34) for starting.

5. An arrangement as claimed in any preceding claim wherein the arrangement includes a plurality of main engines (34) and more than one main engine (34) has an auxiliary power unit (21) mounted on it.

6. An arrangement as claimed in claim 5 wherein all or some of the auxiliary power units (21) are coupled to an electrical power distribution path whereby in operation electrical power is distributed to at least one electrical machine (26, 27) connected to one main engine (34).

7. An arrangement as claimed in any preceding claim wherein the auxiliary power unit (21) is coupled to the transmission path (25, 29) by a clutch (126) device.

8. An arrangement as claimed in any preceding claim wherein the electrical machine (26, 27) is coupled to the arrangement by a clutch (28).

9. An arrangement as claimed in any preceding claim wherein the auxiliary power unit (21) is a gas turbine engine.

10. An arrangement as claimed in any preceding claim wherein the auxiliary power unit (21) is connected to an electrical battery.

11. An arrangement as claimed in any preceding claim wherein the main engine (34) comprises a nacelle and the auxiliary power unit (21) is mounted within the nacelle.

12. An arrangement as claimed in any preceding claim wherein the auxiliary power unit (21) is mounted on a gear box of the main engine (34).

13. An arrangement as claimed in any preceding claim wherein the auxiliary power unit (21) is mounted on a fan case or a core engine case of the main engine (34).

14. An aircraft comprising two or more main gas turbine engines (34), at least two of the main engines (34) each comprising an auxiliary power unit (21) as claimed in claim 1.

15. A method of providing electrical and / or hydraulic power to an aircraft comprising a power transmission system connected to a gas turbine engine arrangement; the gas turbine engine arrangement comprising a main engine (34), an auxiliary power unit (21), an engagable mechanical or electrical connection between the main engine (34) and the auxiliary power unit (21); the method comprising the steps of:
during operation of the main engine (34), engaging either the mechanical or the electrical connection to connect the main engine (34) and the auxiliary power unit (21) to start the auxiliary power unit (21),
engaging the auxiliary power unit (21) with the transmission system, and
subsequently shutting off the main engine (34).

16. A method of starting an auxiliary power unit (21) of a gas turbine engine arrangement; the gas turbine engine arrangement comprising an auxiliary power unit (21), a starter (24), an engagable mechanical or electrical connection between the starter (24) and the auxiliary power unit (21); the method comprising the step of:
engaging either the mechanical or the electrical connection to connect the starter (24) and the auxiliary power unit (21) to start the auxiliary power unit (21).

17. A method of starting an auxiliary power unit (21) of a gas turbine engine arrangement; the gas turbine engine arrangement comprising at least two main engines (34) each having an auxiliary power unit (21) mounted thereon to transmit drive therebetween, the auxiliary power units (21) connect to one another via network switching means; the method comprising the steps of:
a) starting one auxiliary power unit (21),
b) starting one of the main engines (34) via the connection with the started auxiliary power unit (21),
c) starting at least one other main engine (34) via either the started auxiliary power unit (21) or the now operational main engine (34),
such that each of the main engines (34) is capable of being started in the event of a failure of one of the auxiliary power units (21).
